# EUROPEAN PATENT APPLICATION

(11) **EP 1 521 420 A2**
(43) Date of publication of application: **06.04.2005**
(21) Application number: 04104166.6
(22) Date of filing: 31.08.2004
(51) Int. Cl.: H04L 29/06

(54) **Autonomic block-level hierarchical storage management for storage networks**

(30) Priority: 30.09.2003 EP 03103623
(71) Applicant: International Business Machines Corporation, Armonk, NY 10504 (US)
(72) Inventor: Bolik, Christian, 26121 Oldenburg (DE)
(74) Representative: Teufel, Fritz

(57) **Abstract**

Disclosed is a Hierarchical Storage Management (HSM) system and method where client systems (100,105,110) are connected to physical storage devices via a storage virtualization system (SVS) (130) which is embedded in a storage network (135). The SVS provides virtual disk volumes to the client systems as an abstraction of the physical storage devices (115,120,125). The client systems have no direct connection to the physical storage devices and the SVS provides an abstract view of these devices, which allows it to utilize the available physical storage space by spreading storage assigned to the individual client systems across the physical storage devices. The core component of the SVS is a block-mapping table (BMT) that translates each virtual block address being issued by the client systems to a corresponding physical block address.

## Description

### BACKGROUND OF THE INVENTION

### Field of the Invention

The present invention is in the field of computer environments where one or more client systems are connected to physical storage devices via a storage network and more particularly relates to a system and method for managing such a digital storage network.

### Description of the Related Art

In order to cost-effectively store rarely used data, Hierarchical Storage Management (HSM) systems have been used in the past on a per client system basis. Traditional HSM systems operate at the file level, migrating inactive files to tertiary storage, such as tape, optical media, or compressed or lower-cost disk, based on an administrator-defined threshold of volume utilization. When these files are later accessed, they are usually recalled in full back to secondary storage, such as disk.

These types of HSM systems require substantial configuration efforts on the HSM client machines, which can become unwieldy in a large enterprise scenario. Also, they have a strong dependency on operating system (OS) and file system types used, and typically require porting, which usually involves significant source code modifications to support new OS/file system type combinations.

An alternative to file-level HSM is block-level HSM. The present assignee in the mid-90's conducted a research project called "Daisy" which explored block-level HSM as an alternative to the traditional file-level HSM. Block-level HSM has the advantages of being file system independent, and managing data at a smaller granularity (blocks vs. files) which enables HSM of database tables, regardless of whether they are located on "raw" volumes or as a single file in a file system.

One of the technical obstacles HSM solutions have been faced with so far, especially in mentioned enterprise environments, is that they are either dependent on the Operating System and file system type used (in the case of file-based HSM systems), or dependent on the Operating System used only (in the case of existing, less widely used block-level HSM systems). The consequence of this is that HSM software needs to be installed on each individual client system for which HSM functionality is to be provided.

In the meantime, in-band storage virtualization software such as DataCore's SANsymphony, FalconStor's IPStor, and IBM TotalStorage SAN Volume Controller have entered the market. These products enable disk storage sharing across all types of Operating Systems, such as UNIX, Linux, Microsoft Windows, Apple MacOS, etc.

One disadvantage of the above described HSM solutions and other approaches like AMASS of ADIC Corp. (http://www.adic.com) is that they put the block-level HSM into the HSM client machine, thus creating a dependency on the client machine's OS. Also, unless other hosts mount a HSM-managed file system from this host by using network protocols such as NFS, other machines in the enterprise can have their data HSM-managed only by installing the same HSM software, thus further increasing TCO (Total Cost of Ownership).

There is thus a need for an underlying storage management system which avoids the above mentioned disadvantages of the prior art approaches and which particularly avoids the pre-mentioned porting requirement and the requirement to install HSM software on each client.

In addition there is a growing need to cost-effectively store "fixed content" or "reference data" (estimated to grow 80% year-to-year) that needs to remain readily accessible (e.g., to meet legal regulations) but is used and accessed only relatively rarely.

### SUMMARY OF THE INVENTION

The underlying idea of the present invention is to apply known HSM concepts to existing block-level storage virtualization techniques in storage network environments in order to extend virtualized storage from a secondary storage (e.g. a hard disk device = HDD) to a tertiary storage (e.g. a tape storage system), similarly to how virtual memory management is used in modern operating systems to extend system memory (RAM) with secondary storage (HDD), and thus to exploit a non-obvious technical synergy by combining block-level HSM with a storage virtualization system located in the storage network.

The invention, in other words, proposes to place the functionality of said block-level HSM in to the storage network itself. One possible place is a storage virtualization software (as described in the figurative part in more detail) such as the virtualization engine contained e.g. in the present assignee's storage virtualization engine "TotalStorage SAN Volume Controller". Once enabled, all hosts connecting to and using this storage network would be able to utilize HSM, regardless of the operating system and file system types used. In particular, these hosts will not need any configuration on their side to exploit HSM. Another benefit of putting HSM into a storage network is that this way there is only a single point of control and administration of HSM, thus reducing Total Cost of Ownership (TCO).

The combination of these two concepts results in a number of advantages over the prior art, as described by the following description of the preferred embodiments. One example is the use of the same HSM instance by heterogeneous clients like UNIX and WINDOWS machines.

In a first preferred embodiment, the necessary HSM software of each of the client machines is centralized in a special HSM controller called storage virtualization device. Thus there is no need to install special HSM software on each client computer in order to use HSM services. This controller provides all HSM deployment and management functionalities in a single entity. Thus the advantage over existing block-level HSM solutions is that HSM deployment and management is centralized in said single entity within a Storage Area Network (SAN).

In addition to this, HSM now can be provided in a totally transparent fashion to client systems running any Operating System (OS) that is capable of attaching to a storage virtualization product and utilizing its volumes, without the need of installing additional software on these client systems. By implementing block-level HSM inside of the storage virtualization product, the storage virtualization can be extended to removable media such as tape, resulting in virtually infinite volumes for storing data.

Integrating block-level HSM into a storage virtualization system located in a storage network increases the effectiveness of the computing systems making use of this functionality by reducing the operating complexity of such systems through the use of automation and enhanced virtualization. Storage virtualization is extended beyond random access storage devices like hard disk devices (HDDs), which are traditionally the storage devices being virtualized, to sequential access storage devices like tape storage devices, providing a seamless integration of both of these storage device types.

Thereupon, user data is moved transparently between disk and tape storage in a self-optimizing fashion, to ensure that only the most active data is located on faster and typically more expensive storage media, while inactive data is transparently moved to typically slower and lower-cost storage media. Placing this functionality into the storage network reduces complexity, as no additional software needs to be installed on any of the computing systems wishing to make use of this block level HSM functionality. Instead, installation and administration cost of this function is reduced to the storage virtualization system.

### BRIEF DESCRIPTION OF THE DRAWINGS

In the following, the present invention is described in more detail by way of preferred embodiments from which further features and advantages of the invention become evident where similar or functional identical or similar features are referenced using identical reference numerals.

In the drawings
- FIGURE 1: depicts a schematic view of a computing environment where one or more client systems are connected to physical storage devices via a storage virtualization system (SVS) according to the invention that is embedded in a storage network;
- FIGURE 2: depicts another schematic view of a typical set-up of a storage virtualization environment according to the invention;
- FIGURE 3: depicts another schematic view of an SVS scenario according to the invention;
- FIGURE 4: shows two example block-mapping table (BMT) entries in accordance with the invention;
- FIGURE 5: shows another schematic view of an SVS scenario according to the invention where one or more tertiary storage devices are attached to the storage network;
- FIGURE 6: shows a preferred embodiment of the BMT according to the invention having implemented an aging concept;
- FIGURE 7: depicts another state of the BMT where a virtual block of a virtual volume is selected to be copied to a tape storage; and
- FIGURE 8: depicts yet another state of the BMT after a virtual block, which was previously migrated, is accessed by a client computer.

### DETAILED DESCRIPTION OF PREFERRED EMBODIMENTS

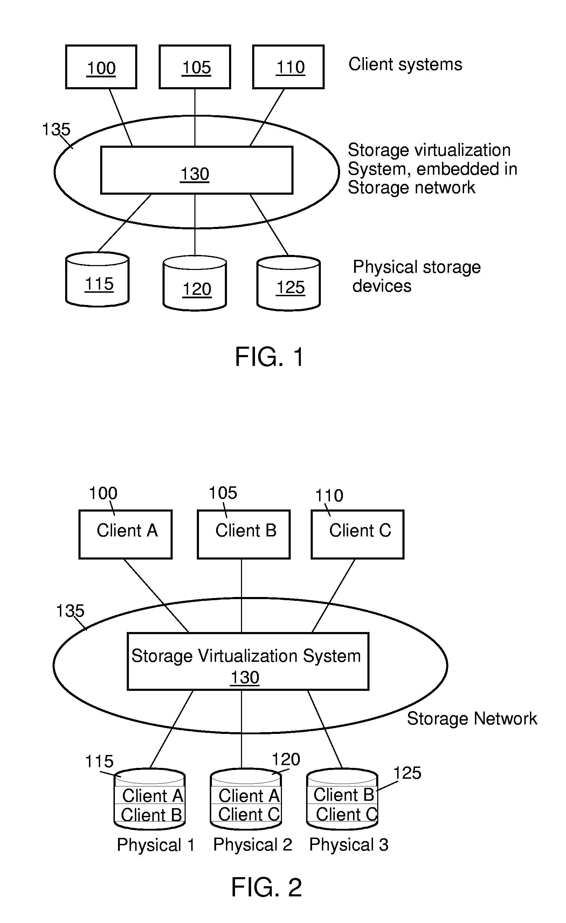

As shown schematically in FIGURE 1, the following scenario relates to computing environments where one more client systems 100 - 110 are connected to physical storage devices 115 - 125 via a storage virtualization system (SVS) 130, which is embedded in a schematically drawn storage network 135, e.g. a Storage Area Network (SAN). The SVS 130 provides virtual disk volumes to the client systems 100 - 110 as an abstraction of the physical storage devices 115 - 125.

FIGURE 2 depicts the set up of a typical storage virtualization environment in greater detail. The three client systems 100 - 110, Client A, B, and C, are connected via the storage network 135 to the SVS 130. The SVS 130, in turn, is connected via the storage network 135 to the three physical storage devices 115 - 125, designated 'Physical 1' etc..

The client systems 100 - 110 have no direct connection to these storage devices 115 - 125. Moreover, the SVS 130 provides an abstracted view of the physical storage devices 115 - 125, which allows it to efficiently utilize the available physical storage space by spreading storage assigned to the individual client systems 100 - 110 across the physical storage devices 115 - 125. This behaviour is illustrated in that the storage device 115 contains (i.e. the SVS is spreading) storage assigned to the client systems 'Client A' 100 and 'Client B' 105, and in that the storage device 120 contains storage assigned to the client systems 'Client A' 100 and 'Client C' 110 and in that the storage device 125 contains storage assigned to the client systems 'Client B' 105 and 'Client C' 110.

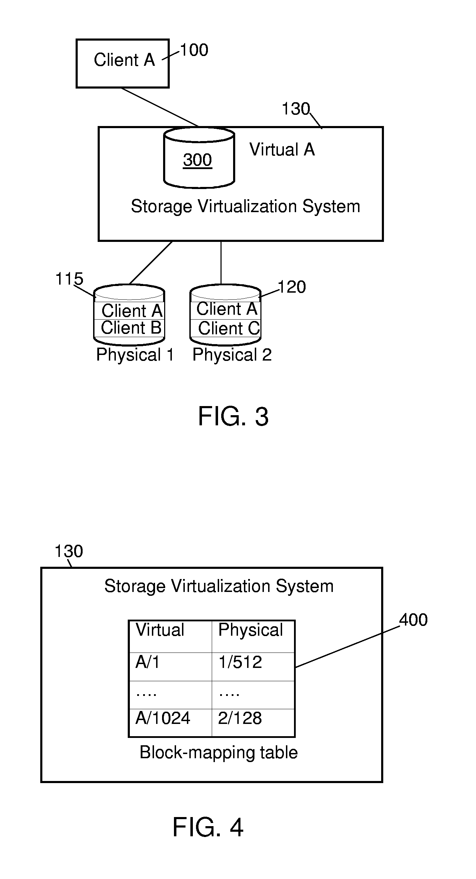

As illustrated by the schematic drawing depicted in FIGURE 3, each of the client systems 100 - 110, in the present view 'Client A' 100, is unaware of the existence of the physical storage devices 115 - 125. All they operate with is the corresponding virtual volumes 300 presented by the SVS 130. The herein exemplarily shown virtual volume 'Virtual A' 300 includes both of the storage spaces 'Client A' stored on physical storage devices 'Physical 1' 115 and 'Physical 2' 120 in a virtual manner which means that these two physical storage spaces are treated as only one storage space.

The core component of the above mentioned SVS 130 is a block-mapping table (BMT) 400, a preferred embodiment of which being depicted in FIGURE 4, which translates each virtual block address ("A/1", ..., "A/1024") contained in the left column of the BMT 400 and being issued by a particular client system 100 - 110 to a corresponding physical block address ("1/512", ..., "2/128") contained in the right column of the BMT 400.

A "block" in this context is not tied to the physical block sizes of the underlying physical storage devices 115 - 125, but can be comprised of one or more of such physical blocks. FIGURE 4 shows two example BMT entries, one which maps block 0 of virtual volume A to physical volume 1, block 512, and one which maps block 1024 of the same virtual volume to physical volume 2, block 128.

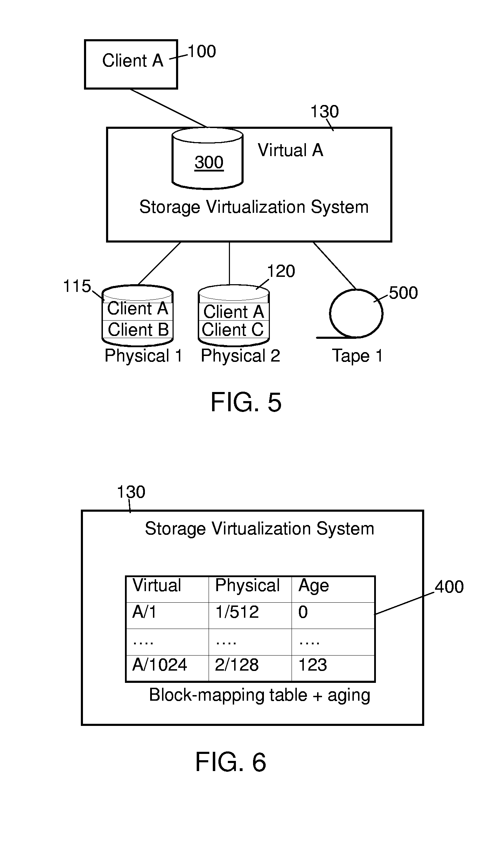

In order to implement a block-level Hierarchical Storage Management (HSM) system inside the SVS 130, one or more tertiary storage devices 500 such as compressed or lower-cost disk, or a tape device need to be attached to the storage network 135, so that they are accessible to the SVS 130, as shown in FIGURE 5.

As an important consequence, the necessary HSM software of each of the client systems 100 - 110, as already mentioned in the introductory part, can be centralized in a special HSM controller (or "storage virtualization device") or preferably, embedded into the SVS and thus there is no need to install special HSM software on each client computer system 100 - 110 in order to make use of HSM services.

In order to determine which blocks located on the secondary storage devices 'Physical 1' 115 and 'Physical 2' 120 are eligible of being migrated to the tertiary storage device 500 (presently 'Tape 1'), the BMT 400 is extended with an additional column indicating the "age" of the respective block, which is the right column shown in FIGURE 6. "Age" in this context means time elapsed since last access to this block and in the present embodiment is assigned with continuous numbers between '0' and 'n' with 'n' representing the number of time units elapsed since last access.

In the present HSM management situation (i.e. BMT snapshot depicted in FIGURE 6), the exemplary first virtual block entry 'A/1' with its corresponding physical block address '1/512' is assigned with an "age" number '0' which means that this entry has just been accessed, wherein the exemplary last virtual block entry 'A/1024' of the BMT 400 with its corresponding physical block address '2/128' is assigned with an "age" number '123' which means that this entry has last been accessed 123 time units ago.

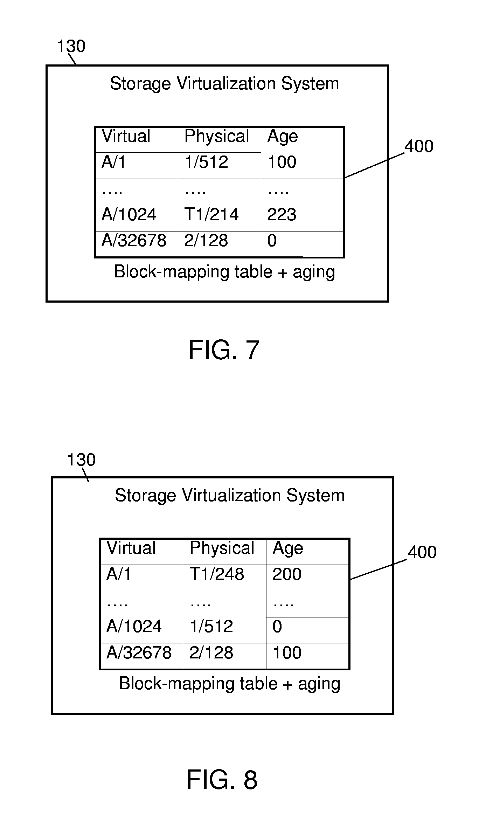

If the SVS 130 determines that it requires more space in the secondary storage devices 115 - 125 to fulfil a client request, it picks the "oldest" block of the respective virtual volume and migrates it to secondary storage. The physical block on the secondary storage device then becomes available for new data. In FIGURE 7, virtual block 1024 of virtual volume A is selected to be copied to tape 'T1', block 214. Then, the corresponding block 128 on physical volume 2 is used to store virtual block 32678.

Virtual block 'A/1024' now is located on tape T1, block 214. If later on this virtual block is accessed again by the client system using virtual volume A, the SVS 130 migrates the virtual block that has not been accessed in the longest time to tertiary storage 500, and then stages the requested block back to secondary storage, at the same location that was allocated by the block just migrated.

FIGURE 8 depicts the state of the BMT 400 after virtual block 'A/1024', which was previously migrated, is accessed by 'Client A' 100: The "oldest" virtual block 'A/1' is copied (migrated) to tape block 'T1/248', and the requested block is staged back to physical block '1/512', which is the same block as the one previously allocated to virtual block 'A/1'.

The pre-described storage virtualization concept can be implemented either in hardware or software. An according software, as an example, which is run in the storage network 135, virtualizes the real physical storage 115 - 125 by presenting the above described virtual volumes 300 to client hosts 100 - 110. These virtual volumes 300 can consist of one or more physical volumes, with any possible combination of RAID-(Redundant Array of Independent Disks) levels, but to the client hosts 100 - 110 these virtual volumes 300 appear as one big volume with a certain reliability and performance level.

According to the present invention, this technical virtualization concept is extended by including the above described block-level HSM.

In order to perform HSM at the block level, the virtualization software needs to keep track of when each virtual extent located on secondary storage (disk) was last accessed. The virtualization software itself monitors the utilization of the secondary storage, and once utilization exceeds a policy-defined threshold, autonomously decides which extent is copied from secondary 115 - 125 to tertiary storage 500, to make space available on secondary storage 115 - 125. By monitoring access patterns inside the virtualization software, the HSM can become self-optimizing, tuning itself to favor less frequently accessed blocks over more frequently accessed ones.

In the following, for illustration purposes, a disk storage (e.g. above mentioned RAID) is regarded as secondary storage 115 - 125, and tape as tertiary storage 500. This is just an example setup, tertiary storage 500 could also be located on low-cost random access media such as JBODs, or other removable media such as optical media (CD-ROM, DVD-ROM). Also, the focus is on "in-band" virtualization software, rather than "out-of-band", since the former gets to intercept each I/O against the virtual volume, and can thus perform extent migration and recall operations according to the I/O operation being requested by the client machine.

A preferred procedure of how an HSM-managed volume would be set up and managed by the virtualization software (VSW) comprises at least the following steps a) - ):
a) The user specifies the size of the virtual volume (s_v), and the size of the disk cache (s_d, with s_d < s_v);
b) the user specifies high and low threshold for the disk cache (t_high, t_low), as part of the virtualization policy, with t_low < t_high < s_d;
c) based on these values, the VSW initializes 2 tables, one keeps track of the location of each virtual extent (the "extent table", the other keeps track of disk cache allocation ("cache table");
d) the virtual volume is formatted with a file system (note that all modern file systems only write those blocks that need to hold metadata and do not touch each block in the volume individually);
e) the VSW periodically copies extents from disk to tape, marking them as "shadowed" in the extent table, to allow for faster threshold migration;
f) new extents are first created on disk, thus increasing the volume utilization and ultimately causing it to exceed the high threshold, consequently triggering threshold migration;
g) once the VSW detects that disk cache usage exceeds the policy-defined high threshold (t_high), the VSW determines which extents located on disk haven't been accessed in the longest period of time (e.g., using a Least-Recently-Used (LRU) algorithm), copies them to tape unless they're already shadowed, marks the disk cache extent as available, and updates the extent table to now point to tape storage only. This process is repeated until the disk cache utilization is equal to or less than the policy-defined low threshold (t_low);
h) if an extent is accessed that is located on tape only (state in the extent table is "tape"), the VSW if required triggers threshold migration to make space available in the disk cache, and then copies the extent back from tape to disk, marking it again as "shadowed";
i) when this extent later is modified (i.e. the VSW intercepts a "write" operation"), its state is set to "disk" in the extent table, and the tape copy of the extent is made inactive (note that since tape does not allow for update-in-place, a subsequent reclamation process needs to be run for garbage collection - this would not be an issue if a storage management system such as TSM was used as the backend storage server performing the tape management).

Since copying extents from secondary storage 115 - 125 to tertiary storage 500 and back increases the storage network traffic in the storage network 135 required for using a virtual volume for storage, scalability can be achieved either by adding processing nodes to the storage network that perform the copy operations, or by exploiting third party data movement, as provided, e.g., by SAN gateways or other devices which exploit the SCSI-3 Extended Copy command.

One important aspect for a block-level HSM embedded in the storage network 135 is to determine which extents are eligible for migration in a self-optimizing fashion, which includes keeping track of extent aging. The storage requirements involved in simply assigning a timestamp to each virtual extent may be too high. This problem of managing extent aging is known from the field of virtual memory management, and techniques developed here can be applied to block-level HSM as it is presented in this disclosure. One example is the way page aging is implemented in the Linux 2.4 kernel: Whenever a page is accessed its "age value" is incremented by a certain value. Periodically all pages are "aged-down", by dividing their age value by 2.

When a page's age value is 0, it is considered inactive and eligible for being paged out. A similar technique can be applied to block-level HSM.

In the following there will be described further embodiments of the above described HSM approach. In one embodiment, the BMT 400 is extended with an additional column, so that when staging back a virtual block from tertiary to secondary storage, the location of the block in tertiary storage is recorded in this block's BMT entry. If only read accesses are performed to this block and it needs to be migrated back to tertiary storage later on, no data would need to be copied, since the data on tertiary storage 500 is still valid.

The proposed block-level HSM for storage networks 135 is also not restricted to a 2-tier storage hierarchy. In fact, there is no limitation to the number of levels a storage hierarchy managed by such a HSM system could be comprised of, since the BMT 400 would be the central data structure keeping track of the location of each data block in the storage hierarchy.

In order to guard against media failure, the SVS 130 can automatically create multiple copies of data blocks when migrating to tertiary storage. If on a subsequent stage operation the read request to one tertiary storage media fails, the request could be repeated, targeting another tertiary storage media that contains a copy of the same data block.

Another application of the proposed HSM system would be remote mirroring since there is no restriction on the locality of the tertiary storage devices 500.

To accelerate migration when free secondary storage space is needed, the SVS 130 can proactively copy "older" virtual blocks to tertiary storage in a background operation. When free secondary storage space is required, the BMT 400 will just need to be updated to indicate that the corresponding virtual blocks now no longer reside in secondary, but tertiary storage 500.

## Claims

1. A storage management system for managing a digital storage network including at least two hierarchical storage levels interconnected to form said digital storage network that can be accessed by at least one client system, **characterized by** storage virtualization means located in said storage network for providing virtual storage volumes to said at least one client system as an abstraction of physical storage devices contained in said storage network, wherein said management of the storage network is accomplished on a block-level.

2. System according to claim 1 wherein said storage virtualization means are centralized in a single functional entity within said storage network.

3. System according to claim 1 or 2 wherein said storage virtualization means include a block-mapping table which translates virtual block addresses issued by one of said client systems to a corresponding physical block address.

4. System according to claim 3 wherein said block-mapping table comprises an additional column indicating the time elapsed since last access to a respective block.

5. System according to the preceding claims wherein a hierarchical storage management software is implemented inside of the storage virtualization system (SVS), establishing a centralized HSM controller.

6. System according to the preceding claims wherein said block-mapping table comprises an additional column for recording the location of a virtual block in a tertiary storage when the virtual block is staged from a secondary to a tertiary storage, or back from a tertiary to a secondary storage.

7. A method for managing a digital storage network including at least two hierarchical storage levels interconnected to form said digital storage network that can be accessed by at least one client system, **characterized by** providing virtual volumes being externalized by virtual block addresses wherein said virtual block addresses issued by said at least one client system connected to said storage network are translated to a corresponding physical block address, said translation step being performed in said storage network.

8. Method according to claim 7 wherein said translation step is performed utilizing a block-mapping table.

9. Method according to claim 8 wherein said mapping table is extended with a column indicating the time elapsed since last access to a respective block.

10. Method according to claim 9, comprising the steps of determining if at least one secondary storage device requires more storage space to fulfil a client request, and if so, picking an oldest block of the respective virtual volume and migrating it to a tertiary storage.

11. Method according to claim 10 wherein keeping track of when each virtual block located on a secondary storage was last accessed.

12. Method according to claim 11 wherein monitoring the utilization of the secondary storage and once utilization exceeds a pre-defined threshold, autonomously deciding which block is copied from the secondary storage to a tertiary storage in order to make space available on the secondary storage.

13. Method according to claim 12 wherein monitoring access patterns for accesses to virtual blocks located on the secondary storage in order to favor less frequently accessed blocks over more frequently accessed ones.

14. Method according to any of claims 8 to 13 wherein recording the location of a block in the tertiary storage if the block is migrated from the secondary storage to the tertiary storage, or staged back from the tertiary storage to the secondary storage.
